# EUROPEAN PATENT SPECIFICATION

(11) **EP 4 194 411 B1**
(45) Date of publication and mention of the grant of the patent: **20.11.2024**
(21) Application number: 22211182.5
(22) Date of filing: 02.12.2022
(51) Int. Cl.: C02F 9/00, A23L 3/358, A23L 3/375, F25C 1/00, A61L 2/20, C02F 1/22, C02F 1/28, C02F 1/44, C02F 1/72, C02F 1/76

(54) **PROCESS FOR THE PRODUCTION OF ICE FOR FOOD USE**
VERFAHREN ZUR HERSTELLUNG VON EIS FÜR LEBENSMITTELZWECKE
PROCÉDÉ POUR LA PRODUCTION DE GLACE À USAGE ALIMENTAIRE

(30) Priority: 09.12.2021 IT 202100030932
(43) Date of publication of application: 14.06.2023
(73) Proprietor: Ice Cube Impianti S.r.l., 90018 Termini Imerese PA (IT)
(72) Inventor: Lipocelli, Leopoldo, 90018 Termini Imerese PA (IT)
(74) Representative: Perani & Partners S.p.A.

(56) References cited:
- DE-C- 600 032
- ANONYMOUS: "Igloo Ice Maker Cleaning with Hydrogen Peroxide", RED BARN FARM, 9 September 2017 (2017-09-09), XP055941516, Retrieved from the Internet <URL:www.redbarnfarm.ca/igloo-ice-maker-cleaning-with-hydrogen-peroxide/> [retrieved on 20220712]

## Description

### Field of the invention

The present invention relates to a method for the production of ice for food use which is resistant to external contamination, in particular of bacterial origin, as well as capable of reducing waste in terms of water, additives and energy.

### Background art

Packaged ice for food use is not always used and handled in evening and daytime environments appropriately. For example, the ice can be poured into containers which are not perfectly sanitized, or be picked up with scoops which are also not perfectly sanitized, or it can be stored in unsuitable or inadequately cleaned and maintained freezers. For these reasons ice, with respect to other foods, is more exposed to the risk of accidental contamination, albeit minor, which can make the product non-conforming to its use for food purposes.

It should be noted that in the current state of the art, ice does not exist with an intrinsic barrier which makes it immune from bacteriological attacks from accidental contamination outside the product.

Specifically, it is known from the prior art to use a common disinfectant such as chlorine, which however must be used in concentrations such that the concentration in the final ice is not more than 0.2 ppm in order to be harmless to health. However, such a limit does not make it immune from bacteriological attacks. A further disadvantage of using chlorine for the production of ice for food use is that chlorine is neither odourless nor tasteless.

The known processes for the production of ice for food and industrial use mostly utilize a technology called "Tube-Ice" where water freezes while falling by gravity. It should be noted that what freezes and solidifies is therefore water, while the disinfectants used and other substances in solution, such as mineral salts, metals tend to precipitate and concentrate in the recirculation water tank of the production machine. Such recirculation water will have a very high hardness and electrical conductivity at the end of the freezing cycle, such that it must be disposed of. Therefore, this water at the end of the freezing cycle is discharged and thrown away with the relative loss of water and everything contained therein, including any disinfectants. Furthermore, it should be noted that such production technology does not allow to completely incorporate the products with disinfecting power, which before solidification in ice were however completely soluble in water. This leads to a significant increase in the necessary concentrations of disinfectants in the water in input to the machinery to ensure that at least a part thereof is incorporated in the ice as well as a significant increase in the overall cost for the production of the ice itself.

In addition to Chlorine which, as mentioned above, is the disinfectant most used for drinking water, another disinfectant can be used for drinking water or for maintaining drinking water conditions: hydrogen peroxide as described in German patent DE600032 to Dr. Georg Alexander Krause and in Italian patent application No. 102020000021142 on behalf of the applicant.

Advantageously, the use of hydrogen peroxide allows to decompose the pollutants by means of oxygen radicals, which are formed as intermediates of the decomposition reaction of hydrogen peroxide, which is partly reduced to water and partly oxidized to oxygen.

The oxygen obtained in such decomposition is dispersed in the air, while the other species is still the water which is added to the water already present. In addition to having the aforesaid disinfecting activity, the free radicals have oxidizing activity, as they eliminate proteins through oxidation, resulting in the lysis of the micro-organisms from which they are composed.

The effectiveness of hydrogen peroxide has been demonstrated against bacteria such as: Staphylococcus Aureus, Staphylococcis spp., Streptococcus spp., Clostridium spp., Escherichia coli, Pseudomonas aeruginosa, Enterococcus spp., Campylobacter, listeria, salmonella.

The effectiveness of hydrogen peroxide has further been demonstrated against viruses such as: Influenza, Enterovirus, Adenovirus, Bovine Respiratory Syncytial Virus, IBR, BVD, Hand, Foot and Mouth Disease.

Leaving no polluting residues, the disinfectant action of hydrogen peroxide is also eco-friendly.

Furthermore, unlike chlorine, hydrogen peroxide has the added advantage of avoiding bacterial resistivity phenomena.

A further advantage is that hydrogen peroxide is harmless to humans even in the event of an overdose, since unlike chlorine it does not lead to the formation of harmful byproducts such as trialomethanes.

Such a disinfectant is added to the water so as to reach a desired concentration before it is sent to the ice production machines. Disadvantageously, the known art of adding to a tank, which acts as a buffer, the quantity of hydrogen peroxide to obtain a concentration of at least 10 ppm in ice, requires an initial concentration at least 17 times greater or about 170 ppm. Furthermore, the fact that the ratio between water in input to the machinery and the ice produced is about 2 to 1, due to the fact that about 50% of the water is lost, means that to have 10 mg of hydrogen peroxide or a concentration equal to 10 ppm in 1 kg of ice, (170x2)-10 = 330 mg of hydrogen peroxide are lost. This fact leads to a considerable waste of hydrogen peroxide.

### Summary of the invention

The applicant has found a process for the production of ice for food use which can overcome the drawbacks of the prior art so as to produce ice resistant to accidental external contamination of the product, in particular of a bacterial type, as well as to reduce waste.

The object of the present invention is therefore a process for the production of ice for food use, comprising the following steps:
A. storing a predefined quantity of water in the liquid state within a first tank having a first predetermined volume;
B. treating the water contained in the first tank at least through reverse osmosis to reduce the electrical conductivity of the water and transferring the treated water to a second tank;
C. mixing hydrogen peroxide within the second tank, used as a disinfectant with the treated water from step B. to achieve a predetermined hydrogen peroxide concentration in the ice;
D. at least partially freezing the mixture from step C for the production of first ice elements;
E. Recycling the water formed in step D to step C.

Such a process allows to obtain ice for food use capable of counteracting contamination, in particular bacterial contamination. It should be noted that a concentration of 10-12 ppm, as experimentally demonstrated in the following, is sufficient to give the ice a good protective barrier against slight contaminations which may accidentally occur in both production and post-production steps, such as storage, handling and professional use of ice as a food refrigerant. However, it would be possible to increase such a concentration up to the limit of 17 ppm of hydrogen peroxide (standard UNI EN 902) without any waste.

The process also allows to avoid the waste of hydrogen peroxide and water by making it possible to recycle non-ice water containing hydrogen peroxide and having a conductivity and hardness such that it can be re-introduced into circulation for the production of ice. In fact, a treatment of the water before any addition of disinfectants such as hydrogen peroxide allows to have a water such that the concentration of added hydrogen peroxide is equal to that which will actually be found in the ice produced.

### BRIEF DESCRIPTION OF THE FIGURES

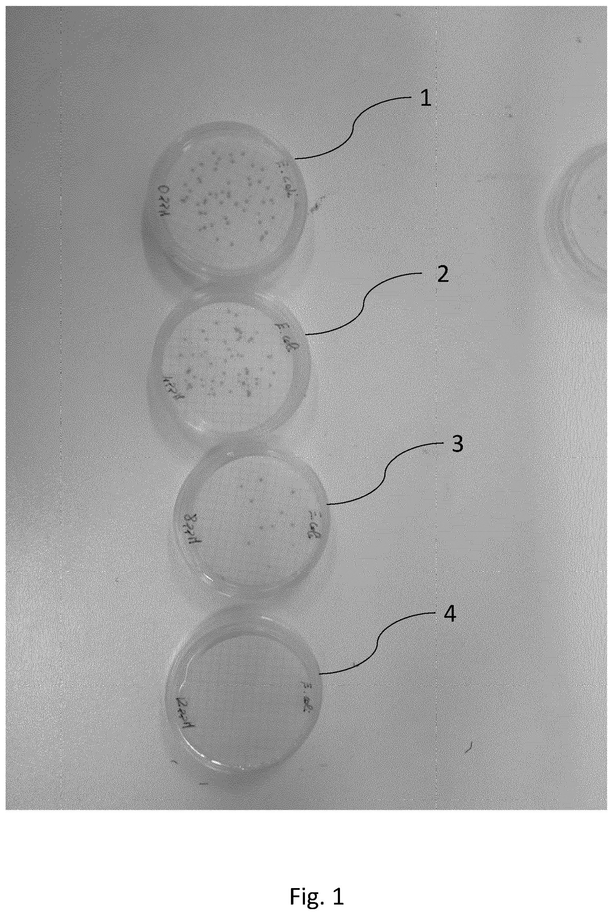

- figure 1 shows the photo of the results obtained by conducting the experimental test 2;

### DETAILED DESCRIPTION

The process of the invention comprises a step E. in which the water formed in step D. is recycled to step E.

Such a possibility of not having to throw away the water which will remain in the tank of the ice-producing machine will allow to re-circulate all the hydrogen peroxide (about 97%) which is not incorporated in the ice, reducing the quantity of hydrogen peroxide to be added to step C. to reach the predetermined concentration.

Such recycling is made possible by a treatment of the water upstream of the freezing (step B.) by reverse osmosis and preferably also by softening the water.

The process in accordance with the present invention allows to recover the mixture remaining in the liquid phase following freezing, eliminating the hydrogen peroxide waste as well as the water waste, maintaining the concentration of hydrogen peroxide in the ice such as to provide the desired protective barrier.

The process of the present invention can be obtained in a traditional ice production plant with the addition of a kit for treating the water before freezing and for recycling the mixture to the liquid state following the freezing step. By way of example, the units of the ice production plant are reported below in a preferred configuration.

The plant comprises a water storage unit comprising one or more first tanks in parallel, configured to store a certain quantity of water from a water source which is preferably chlorinated to prevent bacterial proliferation. The plant comprises a mixing unit, comprising one or more second tanks, in fluid communication with the storage unit and configured to mix the second disinfectant, hydrogen peroxide. A quartz sand-type filter and activated carbon-type filter unit is included between the storage unit and the mixing unit. Furthermore, as part of the kit mentioned above, a water treatment unit configured to perform water softening and a subsequent passage of such water through at least one reverse osmosis membrane is included in the plant between the filtering unit and the mixing unit. Thereby, the water subsequently sent to the mixing unit has an electrical conductivity reduced up to 97% with respect to the initial water. The reverse osmosis acting on the water discards about 1/3 of the total, which is sent to the discharge unit described below, however allowing an ice yield equal to 100% of the mixture sent to freezing thanks to the recycling of the mixture in the liquid phase. Downstream of the mixing unit, the plant includes freezing units, preferably of the Tube-Ice type known in the prior art, to produce first ice elements. The freezing units each include a collection tray for the recovery of the water in the liquid state which falls during the freezing and optionally in the subsequent moment of production of ice portions. Such collection trays are associated and are in fluid communication with a second collection tank, part of the kit, which is in turn in fluid communication with the mixing unit so as to recover the water in the liquid state which remains in the freezing unit trays at the end of the freezing cycle, and reintroduce it into circulation for the production of ice. Specifically, the kit also includes a system of pumps for the reintroduction into circulation of the water which must be returned to the mixing unit from the second collection tank, as thanks to the reverse osmosis treatment this water is recoverable and reusable for the production of ice. Thereby, the quantity of new water which must be integrated for the production of ice will be about 50% lower for the same kg of ice produced with respect to a classic system without reverse osmosis and without a system for recovering the water at the end of freezing. Furthermore, the hydrogen peroxide not remaining in the ice is thereby recovered in its entirety. Specifically, in order to achieve the desired concentration of hydrogen peroxide in the ice, it is necessary to start from a mixture of water with a quantity even up to 17 times higher. However, thanks to the recycling of the post-freezing water, it will only be necessary to integrate the hydrogen peroxide remaining in the ice inside the second tank to maintain the predetermined concentration. In other words, in order to maintain the level of hydrogen peroxide such as to obtain ice with a desired concentration of hydrogen peroxide in the subsequent freezing steps, thanks to the possibility of recycling the post-freezing water, a quantity of hydrogen peroxide equal to that transferred in the ice must be integrated. Furthermore, the reintroduction into circulation of the post-freezing water which is at an average temperature of about 2 °C allows the recovery of the frigories thereof. In fact, this water will mix with the new integration water which enters at a higher temperature, creating a mixture at a lower temperature, reducing the freezing cycle time of the water and bringing a calculated energy saving of about 10%. The freezing units comprise subunits for the segmentation of the ice columns (first ice elements) produced during the freezing step, such segments are sent to the sieving step so as to select second ice elements with specific dimensions, these second ice elements are then sent to the freezing tunnel to be dried before being sent to the storage and conservation room and then to packaging. The process further includes parallel sub-units after the conservation unit, a first line configured to further sieve the second ice elements, eliminate any snow and send them to the packaging unit and a second line configured to crush the ice, sieve it, for the elimination of snow, and send it to the second packaging unit. The packaging, boxing and palletizing unit associated with a storage unit closes the ice production cycle.

The described plant is a possible embodiment. It should be noted that the aforementioned kit can be associated with any ice production plant, as it comprises elements configured to put the post-freezing collection trays of the freezing units in fluid communication with a second collection tank, which is part of the kit, in turn in fluid communication with the mixing tank for the addition of hydrogen peroxide by means of a metering pump, also part of the kit, as well as a unit for water softening and treatment by means of reverse osmosis with relative discharge of the waste water.

It should also be noted that control units equipped with sensors allow the management of the plant described above.

The process for the production of food ice, preferably made in an ice production plant, for example, of the type described above comprises the steps described below. It should be noted that hereinafter it will be clear which steps of the process are performed in a relative unit.

The process comprises the step A. of storing a predetermined quantity of water within the first tank. Step A. involves the use of water from a source such as, for example, the municipal water network and/or a water source. Preferably, the water stored in step A. is drinking water according to *"Italian Legislative Decree no. 31 of 2 February 2001, Implementation of Directive 98*/*83*/*EC on the quality of water intended for human consumption".*

In accordance with a preferred embodiment, the first tank has a volume comprised in the range between 30000 and 70000 litres, preferably 50000 litres.

It should be noted that the water from the water network reaches the first tank through a water conduit. Preferably, the process includes chlorinating the water stored in the first tank, for example, by introducing a concentration of 0.2 ppm of chlorine so as to inhibit the formation of bacteria.

The process comprises a step B. of treating the water contained in the first tank at least by reverse osmosis which allows to reduce the electrical conductivity of the water and transferring the treated water to a second tank. It should be noted that in accordance with a preferred embodiment, the first tank is in fluid communication with a plurality of second tanks so as to parallelize the ice production and optimize the ice production. For these reasons, each second tank, having a lower volume with respect to the first, is sent a portion of the predetermined quantity of water stored in the first tank.

Specifically, step B. includes passing the water contained in the first tank during the transfer thereof to the subsequent steps to a relative second tank. The at least one reverse osmosis membrane allows to retain water compounds such as salts, minerals, metals, etc., thereby reducing the overall electrical conductivity of the water before it is sent to the subsequent steps for freezing.

Preferably the water passes through 1 to 5, more preferably 3 membranes. The reduction of the electrical conductivity of the water allows the recycling of the water at the end of the freezing cycle and therefore allows, as clarified below, to add a concentration of disinfectant, hydrogen peroxide, equal to the concentration transferred to the ice during the freezing step, to ensure the desired concentration of hydrogen peroxide in the ice.

Advantageously, the reverse osmosis process and the consequent recycling of the water at the end of the freezing cycle allows to obtain a closed system in which water waste and hydrogen peroxide waste has been eliminated. In fact, the liquid mixture recovered downstream of the freezing step can be fully recycled and sent back to step C., recovering the entire quantity of hydrogen peroxide present in the mixture, so that only the quantity of disinfectant transferred to the ice must be integrated.

Preferably, the use of reverse osmosis reduces the electrical conductivity of the treated water in a range comprised between 70% and 99%, more preferably between 90% and 98%, even more preferably up to 97%. For example, reverse osmosis allows to bring the electrical conductivity from about 400 µs in the first tank to about 12 µs in the second tank.

In accordance with a preferred embodiment, step B. includes softening the water, reducing for example the percentages of Ca and Mg before reverse osmosis.

In accordance with a preferred embodiment, the process comprises a step H. of filtering the water before step B and after step A. Specifically, step H. includes acting on the water sent from the first tank before it is treated in step B. Such step H. includes performing a filtering of the water to eliminate any suspended materials present in the water before or during the transfer of the stored water to the next step B. In particular, during step H., the water, before feeding step B. as well as the ice-production machinery, passes through a first quartz sand filter for the removal of any suspended materials and a second activated carbon filter for the removal of any odours, flavours and free chlorine particles. In detail, step H. comprises a first filtration stage with quartz sand filter H1. and a second filtration stage with activated carbon filter H2.

The process comprises a step C. of mixing hydrogen peroxide within the second tank, used as a disinfectant with the treated water from step B. Preferably, step C. is conducted in the second tank having a lower volume with respect to the tank of step A. so as to optimize and better control the mixing of hydrogen peroxide and the portion of water sent thereto. In other words, the second tank acts as a *"lung"* before the water is sent to the next step of the process. In accordance with the preferred embodiment, the second tank has a volume comprised in a range between 1000 and 3000 litres.

As anticipated, the use of hydrogen peroxide as a disinfectant in the correct concentrations allows to obtain a finished product (ice) having a disinfectant power in a range comprised between a minimum value to ensure sufficient antibacterial action and a maximum value recommended for drinking water.

It should be noted that the percentage of hydrogen peroxide added to the treated water and transferred to the second tank depends on the concentration of hydrogen peroxide present in the recycled mixture and the desired concentration of hydrogen peroxide in the ice. Specifically, once the desired concentration is defined in the ice, the concentration of hydrogen peroxide in the second tank must be about 17 times higher. Thanks to the use of the steps prior to step C. and the recycling of the mixture after freezing, as clarified below, the addition of hydrogen peroxide to step C. is equal to the desired concentration in the ice. Specifically, for example, if a hydrogen peroxide concentration equal to 170 ppm is necessary in the second tank to have a concentration of hydrogen peroxide equal to 10 ppm in the ice, it will be necessary to add to the recycling water (about 50% of the total) which will have a concentration of about 330 ppm, new water (equal to about the other 50% of the total) with a concentration of hydrogen peroxide equal to 10 ppm so as to obtain a mixture with a total concentration of hydrogen peroxide equal to about 170 ppm.

Advantageously, such a treatment of the water before mixing with hydrogen peroxide eliminates the waste of hydrogen peroxide for any desired concentration of hydrogen peroxide to be obtained in the ice. Specifically, the reverse osmosis treatment preferably combined with the softening simplifies the determination of the hydrogen peroxide concentration in the ice, which becomes exactly the same as the quantity introduced in the step C. without the need to consider or measure the concentration of hydrogen peroxide of the mixture upon input to the machinery for the subsequent steps. In fact, according to what has been described, the only concentration of hydrogen peroxide left in the ice thanks to the recycling of the water at the end of the freezing cycle is to be mixed in the steps following a possible start-up.

Preferably, during step C., to maintain the predetermined concentration, a concentration of hydrogen peroxide comprised in a range between 5 ppm and 20 ppm, preferably between 8 ppm and 17 ppm, more preferably between 10 ppm and 15ppm, is added in the most preferred solution, the concentration of hydrogen peroxide is equal to about 12 ppm. Thereby, it is possible to maintain the predetermined concentration of hydrogen peroxide in step C. comprised in a range between 80 ppm and 350 ppm, preferably between 130 ppm and 270 ppm, more preferably between 160 ppm and 240 ppm, in the most preferred solution, the concentration of hydrogen peroxide is equal to about 200 ppm. In other words, in step C. the predetermined concentration of hydrogen peroxide to be maintained in the water in the various recovery and freezing cycles is defined so as to produce an ice with a desired and constant hydrogen peroxide concentration. Thanks to step B. and the subsequent recovery of the mixture in step E. it is only necessary to replenish the quantity of hydrogen peroxide transferred to the ice. In accordance with a preferred embodiment, it should be noted that such replenishment is performed for each cycle, preferably excluding the first where the predetermined concentration of hydrogen peroxide is added.

It should be noted that from measurements carried out in the experimental phase, it was found that if the water in input has a conductivity equal to, for example, 12.0 µs, this will be exactly the electrical conductivity of the ice produced or of the water obtained upon its dissolution. The same was verified for the hydrogen peroxide concentration. In fact, if the quantity of hydrogen peroxide added to step C. is equal to 12 ppm, such a concentration of hydrogen peroxide is the same as that found in the ice or in the water obtained when it is dissolved.

In accordance with a preferred embodiment, the hydrogen peroxide in step C. is added by means of a metering pump.

The process comprises step D. of freezing a portion of water from step C and comprising hydrogen peroxide for the production of first ice elements.

During the freezing step the mixture from step C. is sent to the relative machinery which freezes it at least partially. The portion of the mixture remaining in the liquid state is collected in collection trays arranged downstream of the relative machinery. Furthermore, it should also be noted that the mixture in the liquid state, coming from the aforesaid step and recovered from the collection trays contains the quantity of hydrogen peroxide which has not remained in the ice. Thereby, it is also possible to save the hydrogen peroxide in step C. Such a possibility of recovering the liquid mixture from the collection trays allows to re-introduce into circulation all the hydrogen peroxide (about 97%) which is not incorporated in the ice. Thereby, only the quantity of hydrogen peroxide transferred to the ice can be integrated in step C.

In accordance with a preferred embodiment, step D. includes that the mixture is sent to the top of the machines and subsequently poured down through steel tubes present in a tube bundle immersed in the cooling liquid, for example ammonia. Thereby, the mixture is frozen in columns subsequently cut into smaller segments. For each ice column about 4 m high (first ice elements), a plurality of second ice elements are obtained. For example, the second ice elements each have a cylindrical geometry with a diameter of 28 mm and a height of about 30 mm.

During the freezing step D. the mixture from step C remaining in the liquid state is accumulated in special collection trays to then be recycled in step C. as previously described. Specifically, step D. also includes the recovery of the mixture in the non-frozen liquid state. It should be noted that the mixture from step C, is specifically treated water comprising hydrogen peroxide.

The process comprises a step E. of recycling to step C. of the mixture remaining in the liquid state in step D.. Specifically, step E. includes recycling all the mixture in the liquid state recovered in the collection trays associated with machinery and sending it to step C by collecting it in a second tank and subsequently sending it to the tank where it is mixed with the new water entering the system and the new hydrogen peroxide. Such reuse, as described above, is associated with water treatment performed upstream by reverse osmosis and preferably combined with softening.

The process steps B., C., D. and E. allow to obtain a closed system in which having reached equilibrium (a stable equilibrium in this case), the salts and minerals entering (coming after reverse osmosis) as well as the hydrogen peroxide concentration (added after the reverse osmosis process) will be exactly the same as those leaving the system or those which will remain in the ice. In fact, both the electrical conductivity and the hydrogen peroxide concentration of the water in input to the machines will increase in value until the electrical conductivity and the hydrogen peroxide concentration of the ice (i.e., what is output by the system) are exactly the same as those introduced into the system, i.e., the electrical conductivity of the water in input after the reverse osmosis and the quantity of hydrogen peroxide introduced by the metering pump.

It should be noted that the recycling of step E. allows to reduce the consumption of drinking water, reducing the waste thereof. In fact, unlike the prior art, the use of reverse osmosis allows the total recovery of the water mixture downstream of the freezing. In fact, the process according to the invention allows to produce a quantity of ice equal to the litres of water sent to the freezing step, being able to cyclically recover the non-frozen mixture. In the face of a waste of water linked to reverse osmosis, the process according to the invention allows to reach water savings of around 25%.

In accordance with a preferred embodiment, the process comprises a step F. of portioning the first ice elements produced in step D. to produce second ice elements of reduced size, for example ice cylinders 28 mm in diameter and about 30mm in height. Specifically, step F. includes acting on the first ice elements and segmenting them so as to produce the ice to be packaged. Preferably, step F. includes sending a hot fluid, for example gaseous ammonia, to the tube bundles where the ice formed. Thereby, the ice columns fall by gravity towards the base of the machinery where cutting means reduce such columns into ice segments. In particular, the cutting means comprise a rotating blade configured to segment the ice columns.

It should be noted that during step F. it is possible that during the initial stage of heating of the columns, part of the ice changes state and the resulting mixture can be recovered together with that remaining in the liquid state during step D. in the respective collection trays.

Preferably, the ice produced during step F. is transferred to a first sieve, preferably "Snow Reel" of the cylindrical type, configured to eliminate the smaller fragments of product and part of the water that covers it.

More preferably, the sieving step is followed by the step of passing the second ice elements in a freezing tunnel, or drying tunnel, at -15°C so as to dry the ice and reduce the possibility of mutual adhesion between adjacent ice elements.

Even more preferably, following the passage in the tunnel, the first ice elements are conveyed to an accumulation and storage area at -10°C. In particular, the ice produced is transferred to a storage container. The latter is a container provided with handling means for the subsequent steps. Thereby, it is possible to produce at different times with respect to those of packaging and ensure a constant flow of ice to the bagging machine.

In accordance with alternative and combinable embodiments, the ice elements can be sent from the storage area to a further cylindrical sieve to remove the smaller fragments of product and the snow covering them, to then go to the packaging machines. Alternatively, the ice from the accumulation and storage area can be sent to a crusher for crushing and subsequently to a crushed/fragmented ice storage area. Such an area can also be fed by the fragments recovered during the further sieving step.

In accordance with a preferred embodiment, the process comprises a recovery step G of the ice waste for cooling the water in step A. and/or in step B. and/or in step C.. Such a step G. includes recovering the ice waste at the stage of the first sieving and that of the sieving to eliminate the snow to recover the frigories otherwise lost, associated with the ice waste: snow and fragments. Specifically, step G. includes recovering the ice waste and using it to cool the water in one or more of steps A., B., and C. to thereby reduce the energy required for freezing during step D.

In accordance with a preferred embodiment, the process of ice production for food use comprises a step I. of packaging the ice produced in the form of bagging, boxing and palletizing followed by a storage of the finished product at -10°C.

Also disclosed herein is the ice produced in accordance with the process described above. In particular, the ice produced has a concentration of hydrogen peroxide H₂O₂ comprised between 1 ppm and 17ppm (maximum recommended dose for drinking water), preferably between 5ppm and 17ppm, more preferably between 10ppm and 17ppm, in the most preferred case the concentration of hydrogen peroxide H₂O₂ is around 12 ppm. Furthermore, the produced ice has an electrical conductivity comprised between 2 and 20 µs, preferably between 10 and 15 µs in the most preferred case around 12 µs.

Such a concentration of hydrogen peroxide is sufficient to give the ice a protective barrier against slight contamination which can occur accidentally in both production and post-production steps, such as storage, handling and professional use of ice as a food refrigerant.

It should further be noted that the ice produced according to such a methodology, given the reduced electrical conductivity, has improved transparency properties making it qualitatively better in the eyes of the final consumer.

### EXPERIMENTAL TESTS 1 TO DETERMINE THE ACTION OF HYDROGEN PEROXIDE (MICROBIAL CHALLENGE TEST)

A series of Microbial Challenge Tests (MCT) were conducted to further support the benefits of the process for the production of ice for food use and the ice produced. The test is a procedure for obtaining data on the critical limits of a production. Specifically, the MCT consists of a laboratory simulation of what happens to a product during production, distribution and handling.

Product MCT involves inoculating, under controlled environmental conditions, a significant number of the study micro-organism in the finished product and evaluating what happens to the micro-organism during the subsequent steps.

Such tests were intended, as already mentioned, to verify the ability of the food ice with hydrogen peroxide added to react to any microbial contamination which occurred both during production and during the transport or handling steps by the end user.

The procedure was aimed at obtaining data on the critical contamination limits of a production and was carried out by trying to simulate what can occur from the microbiological point of view to the ice preserved during production, storage and handling by the consumer in the laboratory.

The test in question included the following steps:
- A selection step of the bacterial strains "associated" with the product;
- An inoculation step of the bacterial strain deemed most suitable for the technological process used;
- A control step, consisting of the analysis of the product at different incubation times, for a variable period;

Subsequently, the effectiveness of the commercial hydrogen peroxide used in the company was also tested on the disinfection of contaminated water.

Specifically, a strain of Escherichia coli ATCC 25922 lot 335-327-4, available in the laboratory where the tests were carried out, was chosen as the microbial strain associated with the product, based on the experience of the person skilled in the art and current legislation concerning water intended for human consumption.

In order to better define the effectiveness of the process and the product, an ice sample with hydrogen peroxide added was selected and taken on 14/02/2020.

### Test Results

### Test 1

On 14/02/2020, the following activities were performed on the sample taken:
- *Verification of the actual hydrogen peroxide concentration*: chemical laboratory tests were performed on the selected sample to establish the residual hydrogen peroxide concentration, which was found to be 5.75 mg/l;
- *Verification of the initial concentration of the bacterial strain Escherichia coli*: laboratory microbiological tests were performed to establish the initial concentration of pre-selected bacteria on the lot of ice on an experimental basis;
- *Preparation of the inoculum*: *starting* from the certified bacterial strain, the bacterial suspensions necessary for inoculation were prepared at the appropriate concentrations so as to be able to simulate any contamination of the finished product in real conditions in the laboratory. In particular, it was chosen to operate at a concentration comprised between 100 and 1000 CFU/100ml. Sterile deionized water was used as a control;
- *Procedure*: i) two aliquots of sterile deionized water and ii) two aliquots of the selected sample of ice with peroxide added were inoculated. One aliquot of the sample was stored at -18°C and analysed after 2 hours, while the other aliquot of the sample was stored at -18°C and analysed after 24 hours.

The results are reported in the following table and demonstrate how the microbial load is lowered by more than 90% after 24 hours.

| | Sample no. 207A-20 before inoculation | Sterile deionized water Aliquot 1 | Sterile deionized water Aliquot 2 | Sample no. 207A-20 after 2h | Sample no. 207A-20 after 24h |
|---|---|---|---|---|---|
| Escherichia coli Concentration UFC/100 ml | 0 | 159 | 177 | 155 | 5 |

### Test 2

On 26/02/2020, the following activities were performed out on the sample taken (and on which the activities were carried out during test 1, including *Verification of the actual hydrogen peroxide concentration* and *Verification of the initial concentration of the bacterial strain Escherichia coli):*
- *Preparation of the inoculum*: based on the previous results, it was chosen to operate at a concentration comprised between 10 and 100 CFU/100ml and sterile deionized water was used as a control;
- *Procedure*: i) two aliquots of sterile deionized water and ii) two aliquots of the selected sample of ice with peroxide added were inoculated. One aliquot of the sample was stored at -18°C and analysed after 2 hours, while the other aliquot of the sample was stored at -18°C and analysed after 24 hours.

The results are reported in the following table and demonstrate how the microbial load is completely abated after both 2 hours and 24 hours.

| | Sterile deionized water Aliquot 1 | Sterile deionized water Aliquot 2 | Sample no. 207A-20 after 2h | Sample no. 207A-20 after 24h |
|---|---|---|---|---|
| Escherichia coli Concentration UFC/100 ml | 11 | 10 | 0 | 0 |

### Test 3

On 03/03/2020, the following activities were performed out on the sample taken (and on which the activities were carried out during test 1, including *Verification of the actual hydrogen peroxide concentration* and *Verification of the initial concentration of the bacterial strain Escherichia coli):*
- *Preparation of the inoculum*: on the basis of the previous results, it was chosen to operate at a concentration comprised between 500 and 5000 CFU/100ml, and subsequently making appropriate dilutions such as to fall within the reading limits of the petri dishes. Sterile deionized water was used as a control;
- *Procedure*: i) two aliquots of sterile deionized water and ii) two aliquots of the selected sample of ice with peroxide added were inoculated. Both aliquots of the sample were allowed to dissolve naturally at room temperature (for about 90 minutes) and then analysed._

The results are reported in the following table and demonstrate how the microbial load is abated by about 40%.

| | Sterile deionized water Aliquot 1 | Sterile deionized water Aliquot 2 | Sample no. 207A-20 Aliquot 1 | Sample no. 207A-20 Aliquot 2 |
|---|---|---|---|---|
| Escherichia coli Concentration UFC/100 ml | 47 | 38 | 30 | 20 |

### Test 4

As previously reported, the effectiveness of the commercial hydrogen peroxide used by the Applicant (called OX-AGUA) on the disinfection of contaminated water was also tested. In particular, the following activities were performed on the sample:
- *Preparation of the inoculum:* based on the previous results, it was chosen to operate at a concentration comprised between 500 and 5000 CFU/100ml. Furthermore, it should be noted that a theoretical concentration of 17.5 mg/l hydrogen peroxide (OX-AGUA) was tested. Laboratory chemical tests were carried out on the sterile deionized water sample thus prepared to experimentally establish the actual concentration of hydrogen peroxide OX-AGUA resulting in 15.00 mg/l. Sterile deionized water was also used as a control in this case;
- *Procedure*: i) two aliquots of sterile deionized water and ii) two aliquots of water with hydrogen peroxide added OX-AGUA added were inoculated. Both aliquots were analysed after 30 minutes._

The results are reported in the following table and demonstrate how the microbial load is abated by about 50%.

| | Sterile deionized water Aliquot 1 | Sterile deionized water Aliquot 2 | Hydrogen peroxide added water OX-AGUA Aliquot 1 | Hydrogen peroxide added water OX-AGUA Aliquot 1 |
|---|---|---|---|---|
| Escherichia coli Concentration UFC/100 ml | 149 | 196 | 72 | 87 |

### Test 5

As previously reported, the effectiveness of the commercial hydrogen peroxide used by the Applicant (called OX-AGUA) on the disinfection of contaminated ice was also tested. In particular, the following activities were performed on the sample:
- *Preparation of ice-OX:* an aliquot of water with commercial hydrogen peroxide used by the applicant was prepared at an actual concentration of 17 mg/l, tested experimentally by chemical laboratory tests. The water thus prepared was immediately frozen in the form of cubes;
- *Preparation of the inoculum*: based on the previous results, it was chosen to operate at a concentration comprised between 10 and 100 CFU/100ml. Sterile deionized water was also used as a control in this case;
- *Procedure*: i) two aliquots of sterile deionized water and ii) two aliquots of ice with hydrogen peroxide OX-AGUA added (OX-ICE) inoculated. Both ice aliquots were allowed to dissolve naturally at room temperature (for about 90 minutes) and then analysed.

The results are reported in the following table and demonstrate how the microbial load is abated by about 80%.

| | Sterile deionized water Aliquot 1 | Sterile deionized water Aliquot 2 | OX-ICE Aliquot 1 | OX-ICE Aliquot 2 |
|---|---|---|---|---|
| Escherichia coli Concentration UFC/100 ml | 23 | 28 | 4 | 7 |

### Conclusions for the experimental tests

The tests carried out show how the presence of hydrogen peroxide in the ice in a range from 5 to 17 ppm helps to counteract the presence of pathogens (in the specific case in question "Echerichia coli") in an increasing manner as its concentration increases. Therefore, it is evident that the ice produced in accordance with the process in question is in general an ice with a higher level of food safety than the standard ice. The reasons lie in the fact that the presence of hydrogen peroxide helps to neutralize contaminations which can occur during the production and packaging process (tests 1 and 2, respectively) and helps to counteract any contamination which can occur during its professional use or when the ice is removed from its original packaging and poured into ice holders and begins its melting process (tests 3 and 5).

### EXPERIMENTAL TESTS 2 TO DETERMINE THE ACTION OF HYDROGEN PEROXIDE (MICROBIAL CHALLENGE TEST)

The following tests were conducted at the Department of Zootechnics and Agriculture of the University of Palermo in order to verify the action of hydrogen peroxide. Figure 1 shows five slides numbered 1 to 4 in which the concentration of hydrogen peroxide in ppm within the water is 0ppm for slide 1, 4ppm for slide 2, 48pm for slide 3 and 12ppm for slide 4. In each of the slides, the concentration of *Escherichia coli* colonies is shown one hour after artificial inoculation in the ice. As can be seen, there is a reduction in the number of colonies which is proportional to the increase in hydrogen peroxide concentration. In the ice with 12ppm of H2O2, no colonies are present.

### EXPERIMENTAL COMPARATIVE TESTS BETWEEN PRODUCTION WITHOUT REVERSE OSMOSIS AND WATER RECOVERY AT THE END OF THE FREEZING CYCLE AND WITH REVERSE OSMOSIS AND WATER RECOVERY AT THE END OF THE FREEZING CYCLE

The following tables 1-3 show the results of the comparison between a classical production process and the process of the present invention. As can be seen from the results, what was previously described regarding electrical conductivity and hydrogen peroxide, water and energy savings is confirmed.

In this regard, the hydrogen peroxide concentration is confirmed as described (table 1). In fact, the predetermined hydrogen peroxide concentration in the ice, according to the present invention, is maintained by adding only the quantity of hydrogen peroxide remaining in the ice. In fact, 200 ppm is the necessary concentration that the water in input to the machinery must have to obtain 12 ppm of concentration in the ice, in the case with reverse osmosis and water recirculation at the end of the freezing cycle, the quantity of hydrogen peroxide to be added to the new water which mixes with the recirculation water is equal to 12 ppm, i.e., the same concentration in the ice (in output from the system). While for the case without reverse osmosis the need to eliminate the water downstream of the freezing for its intrinsic hardness requires the complete replenishment of the hydrogen peroxide concentration which the water in input to the machinery must have (equal to 200 ppm to obtain 12 ppm of concentration in the ice) for each freezing cycle. Furthermore, the ratio of the quantity of water to the quantity of ice produced is about 2 to 1, the quantity of hydrogen peroxide required to obtain 1 kg of ice with 12 mg of incorporated hydrogen peroxide or with a concentration of 12 ppm will be about 400 mg.

Furthermore (table 2), in the solution without reverse osmosis the electrical conductivity remains constant between the step prior to input in the ice production machine and the input thereof, leading to the production of ice with a higher electrical conductivity as well as non-recoverable water waste with high electrical conductivity. On the contrary, in the solution with reverse osmosis and water recovery at the end of the freezing cycle, it can be seen how a reduction of the electrical conductivity is obtained at the input to the machine. This leads to a produced ice with lower electrical conductivity and therefore more transparent and higher quality.

Finally (Table 3), it can be noted that the use of reverse osmosis, from which the possibility of recovering all the water at the end of the freezing cycle derives, not only drastically reduces the actual consumption of H2O2 as already highlighted above, but also the total water use for the production of ice and also allows a reduction in energy consumption for the production of ice thanks to the recovery of the water frigories at the end of the freezing cycle which has an average temperature of about 2°C.

**Table 1**

| | Concentr. Ice H2O2 (ppm) | Concentr. H2O2 water input Mach. (new water + recirculation water) (ppm) | Concentr. H2O2 new water (ppm) |
|---|---|---|---|
| WITHOUT | 12 | 200 | 200 |
| WITH | 12 | 200 | 12 |

**Table 2**

| | Electrical conductivity H2O after REVERSE OSMOSIS (µs) | Electrical conductivity H2O input Mach. (µs) | Electrical conductivity Ice (µs) |
|---|---|---|---|
| WITHOUT | 390 | 390 | 23 |
| WITH | 12 | 200 | 12 |

**Table 3**

| | H2O2 consumption per kg of ice produced (mg) | Total H2O consumption per kg of ice produced (litres) | Energy consumption per kg of ice produced (Wh) |
|---|---|---|---|
| WITHOUT | 400 | 2 | 110 |
| WITH | 12 | 1.5 | 95 |

## Claims

1. A process for producing food ice, comprising the following steps of:
A. storing a predetermined quantity of water in the liquid state within a first tank having a first predetermined volume;
B. passing the water contained in the first tank at least through at least one reverse osmosis membrane to reduce the electrical conductivity of the water and transferring the treated water to a second tank;
C. adding hydrogen peroxide to the second tank and mixing it as a disinfectant with the treated water from step B to a predetermined hydrogen peroxide concentration in ice;
D. at least partially freezing the mixture from step C for producing first ice elements;
E. recycling the water formed in step D. to step C.

2. The process for producing food ice as claimed in claim 1, wherein in step B. by reverse osmosis electric conductivity of water is reduced by 70% to 99%, preferably by 90% to 98% more preferably by 97%.

3. The process for producing food ice as claimed in claim 1 or 2, wherein the step B. includes a water softening stage before water passes through at least one reverse osmosis membrane

4. The process for producing food ice as claimed in any of claims 1 to 3, wherein H₂O₂ is added in step C. at a concentration of 5ppm to 20 ppm, preferably 8 ppm to 17 ppm, more preferably 10 ppm to 15 ppm, the concentration of hydrogen peroxide H₂O₂ being most preferably about 12 ppm, to maintain a predetermined hydrogen peroxide concentration in step C. of 80 ppm to 350 ppm, preferably 130 ppm to 270 ppm, more preferably 160 ppm to 240 ppm, the predetermined hydrogen peroxide H₂O₂ concentration being most preferably about 200 ppm

5. The process for producing food ice as claimed in any of claims 1 to 4, wherein H₂O₂ addition in step C. is performed by a metering pump.

6. The process for producing food ice as claimed in any of claims 1 to 5, wherein in step E. the portion of mixture remaining in the liquid state in step D. is cyclically recovered from a collection tank and the recovered mixture is transferred to step C. for freezing in the next step D.

7. The process for producing food ice as claimed in any of the preceding claims 1 to 6, wherein a step F. is provided for portioning the first ice elements produced in step D. to produce second ice elements, said step F. producing ice scraps.

8. The process for producing food ice as claimed in claim 7, wherein a step G. is provided for recovering the ice scraps to cool the water in step A. and/or in step B. and/or in step C.

9. A process for producing food ice as claimed in any of the preceding claims 1 to 8, wherein a filtering step H. is provided before the step B. and after the step A., the step H. comprising:
H1. A first filtration stage using a quartz sand filter;
H2. A second filtration stage using an activated carbon filter.

## Patentansprüche

1. Verfahren zur Herstellung von Speiseeis, das die folgenden Schritte umfasst:
A. Speichern einer vorbestimmten Menge Wasser im flüssigen Zustand in einem ersten Tank mit einem ersten vorbestimmten Volumen;
B. Durchleiten des im ersten Tank enthaltenen Wassers durch mindestens eine Umkehrosmosemembran, um die elektrische Leitfähigkeit des Wassers zu vermindern, und Weiterleiten des behandelten Wassers in einen zweiten Tank;
C. Zugabe von Wasserstoffperoxid in den zweiten Tank und Vermischen desselben als Desinfektionsmittel mit dem behandelten Wasser aus Schritt B bis zu einer vorbestimmten Wasserstoffperoxidkonzentration in Eis;
D. zumindest teilweises Gefrieren der Mischung aus Schritt C zur Herstellung erster Eiselemente;
E. Rückführung des in Schritt D entstandenen Wassers in Schritt C.

2. Verfahren zur Herstellung von Speiseeis nach Anspruch 1, wobei in Schritt B. durch Umkehrosmose die elektrische Leitfähigkeit des Wassers um 70 % bis 99 %, vorzugsweise um 90 % bis 98 %, mehr bevorzugt um 97 %, vermindert wird.

3. Verfahren zur Herstellung von Speiseeis nach Anspruch 1 oder 2, wobei Schritt B. eine Wasserenthärtungsstufe beinhaltet, bevor das Wasser mindestens eine Umkehrosmosemembran durchläuft.

4. Verfahren zur Herstellung von Speiseeis nach einem der Ansprüche 1 bis 3, wobei H₂O₂ in Schritt C. in einer Konzentration von 5 ppm bis 20 ppm, vorzugsweise 8 ppm bis 17 ppm, mehr bevorzugt 10 ppm bis 15 ppm, zugegeben wird, wobei die Konzentration von Wasserstoffperoxid H₂O₂ am meisten bevorzugt etwa 12 ppm beträgt, um eine vorbestimmte Wasserstoffperoxidkonzentration in Schritt C. von 80 ppm bis 350 ppm, vorzugsweise 130 ppm bis 270 ppm, mehr bevorzugt 160 ppm bis 240 ppm, aufrechtzuerhalten, wobei die vorbestimmte Wasserstoffperoxid-H₂O₂-Konzentration am meisten bevorzugt etwa 200 ppm beträgt.

5. Verfahren zur Herstellung von Speiseeis nach einem der Ansprüche 1 bis 4, wobei die Zugabe von H₂O₂ in Schritt C. durch eine Dosierpumpe erfolgt.

6. Verfahren zur Herstellung von Speiseeis nach einem der Ansprüche 1 bis 5, wobei in Schritt E. der in Schritt D. im flüssigen Zustand verbleibende Teil der Mischung zyklisch aus einem Sammeltank gewonnen wird und die gewonnene Mischung zum Einfrieren im nächsten Schritt D. zu Schritt C. weitergeleitet wird.

7. Verfahren zur Herstellung von Speiseeis nach einem der vorstehenden Ansprüche 1 bis 6, wobei ein Schritt F. zum Portionieren der ersten in Schritt D. hergestellten Eiselemente vorgesehen ist, um zweite Eiselemente herzustellen, wobei in Schritt F. Eisabfälle hergestellt werden.

8. Verfahren zur Herstellung von Speiseeis nach Anspruch 7, wobei ein Schritt G. zur Rückgewinnung der Eisabfälle vorgesehen ist, um das Wasser in Schritt A. und/oder in Schritt B. und/oder in Schritt C. zu kühlen.

9. Verfahren zur Herstellung von Speiseeis nach einem der vorstehenden Ansprüche 1 bis 8, wobei ein Filterschritt H. vor dem Schritt B. und nach dem Schritt A. vorgesehen ist, wobei der Schritt H. umfasst:
H1. Eine erste Filtrationsstufe unter Verwendung eines Quarzsandfilters;
H2. Eine zweite Filtrationsstufe unter Verwendung eines Aktivkohlefilters.

## Revendications

1. Procédé de production de glace alimentaire, comprenant les étapes suivantes :
A. stocker une quantité prédéterminée d'eau à l'état liquide dans un premier réservoir ayant un premier volume prédéterminé ;
B. faire passer l'eau contenue dans le premier réservoir au moins à travers au moins une membrane d'osmose inverse pour réduire la conductivité électrique de l'eau et transférer l'eau traitée vers un second réservoir ;
C. ajouter du peroxyde d'hydrogène au second réservoir et le mélanger comme désinfectant avec l'eau traitée de l'étape B à une concentration prédéterminée de peroxyde d'hydrogène dans la glace ;
D. congeler au moins partiellement le mélange de l'étape C pour produire des premiers éléments de glace ;
E. recycler l'eau formée à l'étape D à l'étape C.

2. Procédé de production de glace alimentaire selon la revendication 1, dans lequel à l'étape B. la conductivité électrique de l'eau est réduite par osmose inverse de 70 % à 99 %, de préférence de 90 % à 98 %, de préférence encore de 97 %.

3. Procédé de production de glace alimentaire selon la revendication 1 ou 2, dans lequel l'étape B. comprend une étape d'adoucissement de l'eau avant que l'eau ne traverse au moins une membrane d'osmose inverse.

4. Procédé de production de glace alimentaire selon l'une quelconque des revendications 1 à 3, dans lequel l'H₂O₂ est ajouté à l'étape C. à une concentration de 5 ppm à 20 ppm, de préférence de 8 ppm à 17 ppm, plus préférablement de 10 ppm à 15 ppm, la concentration de peroxyde d'hydrogène H₂O₂ étant plus préférablement d'environ 12 ppm, pour maintenir une concentration prédéterminée de peroxyde d'hydrogène à l'étape C. de 80 ppm à 350 ppm, de préférence de 130 ppm à 270 ppm, plus préférablement de 160 ppm à 240 ppm, la concentration prédéterminée de peroxyde d'hydrogène H₂O₂ étant plus préférablement d'environ 200 ppm.

5. Procédé de production de glace alimentaire selon l'une quelconque des revendications 1 à 4, dans lequel l'addition de H₂O₂ à l'étape C. est effectuée par une pompe doseuse.

6. Procédé de production de glace alimentaire selon l'une quelconque des revendications 1 à 5, dans lequel, à l'étape E., la partie du mélange restant à l'état liquide à l'étape D. est récupérée cycliquement à partir d'un réservoir de collecte et le mélange récupéré est transféré à l'étape C. pour congélation à l'étape suivante D.

7. Procédé de production de glace alimentaire selon l'une quelconque des revendications précédentes 1 à 6, dans lequel une étape F. est prévue pour portionner les premiers éléments de glace produits à l'étape D. pour produire des seconds éléments de glace, ladite étape F. produisant des restes de glace.

8. Procédé de production de glace alimentaire selon la revendication 7, dans lequel une étape G. est prévue pour récupérer les restes de glace pour refroidir l'eau à l'étape A. et/ou à l'étape B. et/ou à l'étape C.

9. Procédé de production de glace alimentaire selon l'une quelconque des revendications précédentes 1 à 8, dans lequel une étape de filtration H. est prévue avant l'étape B. et après l'étape A., l'étape H. comprenant :
H1. Une première étape de filtration utilisant un filtre à sable de quartz ;
H2. Un second étage de filtration utilisant un filtre à charbon actif.
